# EUROPEAN PATENT SPECIFICATION

(11) **EP 2 980 008 B1**
(45) Date of publication and mention of the grant of the patent: **02.09.2020**
(21) Application number: 14772888.5
(22) Date of filing: 07.03.2014
(51) Int. Cl.: B67C 3/24, B65G 47/90, B65G 47/86

(54) **CONTAINER GRIPPER**
BEHÄLTERGREIFVORRICHTUNG
APPAREIL DE PRÉHENSION DE CONTENANT

(30) Priority: 29.03.2013 JP 2013072973
(43) Date of publication of application: 03.02.2016
(73) Proprietor: Mitsubishi Heavy Industries Machinery Systems, Ltd., Hyogo-ku, Kobe-shi Hyogo 652-8585 (JP)
(72) Inventor: INUKAI Norio, Nagoya-shi Aichi 453-0862 (JP)
(74) Representative: Hoffmann Eitle
(86) International application number: PCT/JP2014/055972
(87) International publication number: WO 2014/156562

(56) References cited:
- EP-A1- 0 577 569
- EP-A1- 2 332 867
- WO-A1-2007/110157
- WO-A1-2012/123566
- BE-A1- 857 107
- DE-A1- 19 903 319
- DE-A1-102005 014 838
- DE-A1-102011 077 167
- GB-A- 840 854
- JP-A- 2002 128 193
- JP-A- 2004 182 280
- JP-A- 2007 197 021
- JP-A- 2007 197 021
- JP-A- 2008 247 528
- JP-A- 2010 510 148
- US-A1- 2010 294 622
- US-B1- 6 523 874
- US-B2- 7 278 451

## Description

### Technical Field

The present invention relates to a container gripper used for delivery and conveyance of containers that are bottle-shaped cans or PET bottles.

### Background Art

In the related art, with respect to container grippers used for delivery and conveyance of containers of bottle-shaped cans or PET bottles, a gripper that can be used both to grip a head part of a bottle-shaped can and to grip a head part of a PET bottle having the same aperture as that of the bottle-shaped can is known (PTL 1).

Additionally, there is known a thin container conveying device including a neck ring holding mechanism and a cap holding mechanism for a container head part and a bottom surface supporting device that supports a bottom surface of the container when a thin container that has flexibility, has a neck ring at the head part, and has low self-standing stability is delivered and conveyed (PTL 2).

### Citation List

### Patent Literature

[PTL 1] Japanese Unexamined Patent Application Publication No. 2007-197021
[PTL 2] Japanese Unexamined Patent Application Publication No. 2008-247528

### Summary of Invention

### Technical Problem

The device of PTL 1 includes a gripper pair constituted of a gripper that holds and grips a lower part of a neck part provided at a lower part of a male threaded part formed in the head part of the bottle-shaped can or the PET bottle (container), and a gripper that holds and grips an upper part of the neck part. In the device of PTL 1, the gripper pairs are alternately attached to respective conveying and rotating bodies in a liquid-filling and packaging line for cleaning of the bottle-shaped can or the PET bottle, filling of a liquid into the bottle-shaped can or the PET bottle, and capping. In this way, bottle-shaped cans or PET bottles conveyed at regular pitches on the circumferences of the rotating bodies having a certain size are neck-conveyed by alternately changing holding of an upper part and a lower part of a neck part provided at a lower part of the male threaded part.

However, in the technique of PTL 1, when the upper part of the neck part of the bottle-shaped can or the PET bottle is gripped, a spherical surface part of the container is gripped. Therefore, there is a possibility that the posture of the bottle-shaped can or the PET bottle may not become vertical and poor conveyance may occur. Additionally, when the lower part of the neck part of the bottle-shaped can or the PET bottle is gripped, the contact width of the gripping part is short with respect to a larger-aperture head part. Therefore, there is a possibility that the posture of the bottle-shaped can or the PET bottle may not become vertical and poor conveyance may occur. Moreover, since a positioning member that regulates upward and downward deviations of the container and adjusting mechanism and a guiding guide that can change the amount of protruding in order to adjust the radial position of the container are required, there is a possibility that a gripping mechanism may become complicated and the cost may become high.

Additionally, the technique of the PTL 2 mentions using a thin container having flexibility and low self-standing stability as a target and delivering and conveying the container in a state where a cap is attached to the container. However, PTL 2 does not disclose a technique regarding the delivery and conveyance of a container having little flexibility and high self-standing stability as in bottle-shaped cans or PET bottles to which no cap is attached. US 2010/0294622 A1 discloses a gripper according to the preamble of claim 1.

The invention provides a container gripper that does not need a positioning member that is accompanied by a change in the amount of protruding when a head part of a container is gripped. Additionally, the invention provides a container gripper that can perform upward and downward positioning of a gripped container or stabilization of a container grip posture. Additionally, the invention provides a container gripper that can be used even when a container is a bottle-shaped can and even when the container is a PET bottle and used even when a head part of a container has a larger aperture and even when the head part of the container has a smaller aperture. Additionally, the invention provides a container gripper that can perform delivery and conveyance without easily wearing a gripping piece and without damaging gripping spots of a container.

### Solution to Problem

According to the invention, there is provided a container gripper according to claim 1 that includes a gripper having a gripping part which is constituted of a pair of gripping pieces disposed to be openable and closable by relative movement, allows a head part of a container to move in and out of the gripper when being opened, and allows the head part to be constrained when being closed, and that alternately changes gripping from a first gripper to a second gripper to deliver the container, the container gripper including: an ascending/descending container platform capable of supporting a bottom surface of the container gripped by the gripper. The gripping part of the first gripper includes a first gripping piece that grips at least half of the circumference of a neck part in a gripping shape adapted to the neck part provided at the head part. The gripping part of the second gripper includes a second gripping piece that grips at least half of the circumference of a lower part in conformity with the lower part of the neck part. When a bottle-shaped can (container) is gripped by the second gripping piece, the second gripping piece grips the lower part of the neck part, and a bottom surface of the bottle-shaped can is supported by the container platform. When a PET bottle (container) is gripped by the second gripping piece, the second gripping piece comes into contact with an underside of a neck ring of the PET bottle, and grips a lower part of a neck part, and the container platform is withdrawn to a position where the container platform does not come into contact with a bottom surface of the PET bottle. The container gripper is configured to be capable of being used to hold both the bottle-shaped can and the PET bottle.

In such a container gripper, a container gripper that alternately changes gripping to deliver the container includes the ascending/descending container platform capable of supporting the bottom surface of the container gripped by the gripper. The gripping part of the first gripper includes the first gripping piece that grips at least half of the circumference of the neck part in the gripping shape adapted to the neck part provided at the head part, and the container gripping part of the second gripper includes the second gripping piece that grips at least half of the circumference of the lower part in conformity with the lower part of the neck part. When the bottle-shaped can is held by the second gripping piece, the second gripping piece grips the lower part of the neck part, and the bottom surface of the bottle-shaped can is supported by the container platform. When the PET bottle is gripped by the second gripping piece, the second gripping piece comes into contact with the underside of the neck ring of the PET bottle, and grips the lower part of the neck part, and the container platform is withdrawn to the position where the container platform does not come into contact with the bottom surface of the PET bottle. By adopting such a configuration, the container gripper can be used to hold both the bottle-shaped can and the PET bottle.

When the bottle-shaped can is gripped, the first gripping piece grips the container in the gripping shape adapted to the neck part, the second gripping piece grips the lower part of the neck part, and the bottle-shaped can bottom surface is supported by the container platform. Thus, the upward-downward positions of the gripped container become constant, and a bottle-shaped can grip posture is stabilized.

When the PET bottle is gripped, the first gripping piece grips the container in the gripping shape adapted to the neck part and the second gripping piece comes into contact with the underside of the neck ring and grips the lower part of the neck part. Thus, upward and downward positioning of the gripped container becomes constant, and the container can be conveyed with a PET bottle grip posture being stabilized.

According to a second aspect, in the container gripper of the invention, a material that constitutes a container gripping part of the first gripping piece and a container gripping part of the second gripping piece is an engineering plastic.

According to a third aspect, in the container gripper of the invention, a material that constitutes a container gripping part of the first gripping piece and a container gripping part of the second gripping piece is a super engineering plastic.

According to a fourth aspect, in the container gripper of the third aspect, the super engineering plastic of the material is polyetheretherketone (PEEK).

According to such a container gripper, even when the container is the bottle-shaped can made of metal (made of aluminum or made of steel), the material that constitutes the container gripping part of the first gripping piece of the first gripper and the container gripping part of the second gripping piece of the second gripper is engineering plastic or super engineering plastic, and polyetheretherketone (PEEK) of the super engineering plastics. Accordingly, wear resistance and durability of the first gripping piece of the first gripper and the second gripping piece of the second gripper can be improved. Additionally, damage to gripping spots of the container by the gripper can be suppressed.

### Advantageous Effects of Invention

According to the above-described container gripper, the container gripper is configured such that, when the bottle-shaped can is gripped, the second gripping piece grips the lower part of the neck part and the bottom surface of the bottle-shaped can is supported by the container platform, and when the PET bottle is gripped, the second gripping piece comes into contact with the underside of the neck ring of the PET bottle and grips the lower part of the neck part and the container platform is configured to be withdrawn to the position where the container platform does not come into contact with the bottom surface of the PET bottle. Accordingly, the container gripper can be used to grip both the bottle-shaped can and the PET bottle.

When the bottle-shaped can is gripped, the first gripping piece grips the container in the gripping shape adapted to the neck part, the second gripping piece grips the lower part of the neck part and the bottle-shaped can bottom surface is supported by the container platform. Thus, the upward-downward positions of the grip container become constant, and a bottle-shaped can grip posture is stabilized.

When the PET bottle is gripped, the first gripping piece grips the container in the gripping shape adapted to the neck part, and the second gripping piece comes into contact with the underside of the neck ring and grips the lower part of the neck part. Thus, upward and downward positioning of the grip container becomes constant, and the container can be conveyed with a PET bottle grip posture being stabilized.

### Brief Description of Drawings

Fig. 1 is a view illustrating a container (bottle-shaped can).
Fig. 2 is a view illustrating a container (PET bottle).
Fig. 3 is a plan view of a container gripper related to an embodiment of the invention.
Fig. 4 is a sectional view taken along line IV-IV of Fig. 3 illustrating a case where the bottle-shaped can is gripped.
Fig. 5 is a view equivalent to Fig. 3 illustrating a case where the PET bottle is gripped.
Fig. 6A is an enlarged view illustrating the details of container gripping parts of the gripper, and is a plan view of a gripping piece of a second gripper.
Fig. 6B is an enlarged view illustrating the details of the container gripping parts of the gripper, and is a front view of a gripping piece that is gripping a head part of the bottle-shaped can.
Fig. 6C is an enlarged view illustrating the details of the container gripping parts of the gripper, and is a front view of a gripping piece that is gripping a head part of the PET bottle.

### Description of Embodiments

Hereinafter, an embodiment of the invention will be described in detail with reference to the drawings. In addition, the invention is not limited by the embodiment. Additionally, constituent elements in the following embodiment include elements capable of being easily assumed by a person skilled in the art, or substantially the same elements.

### Embodiment of Invention

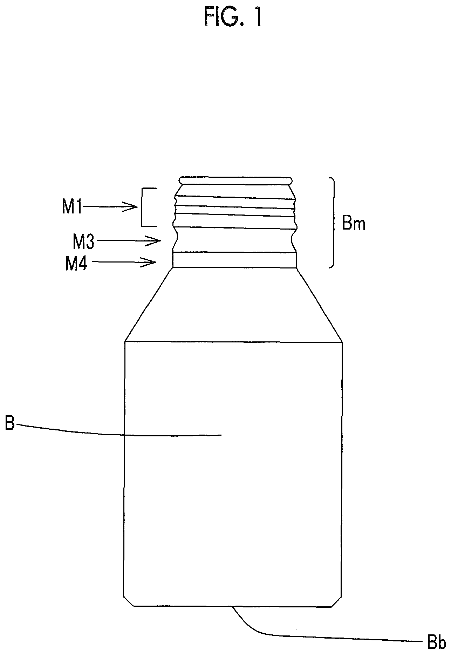

An embodiment of the invention will be described with reference to Figs. 1 to 4.
Fig. 1 is a view illustrating a container (bottle-shaped can).

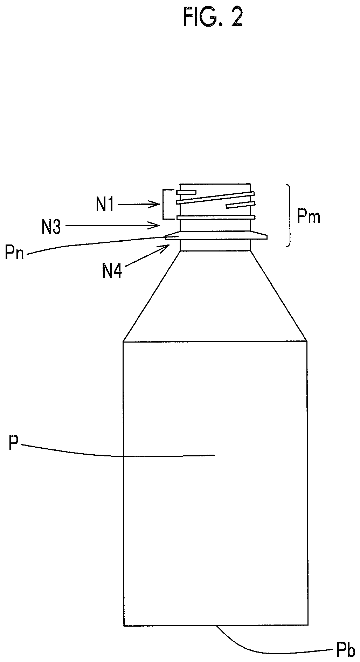

Fig. 2 is a view illustrating a container (PET bottle).

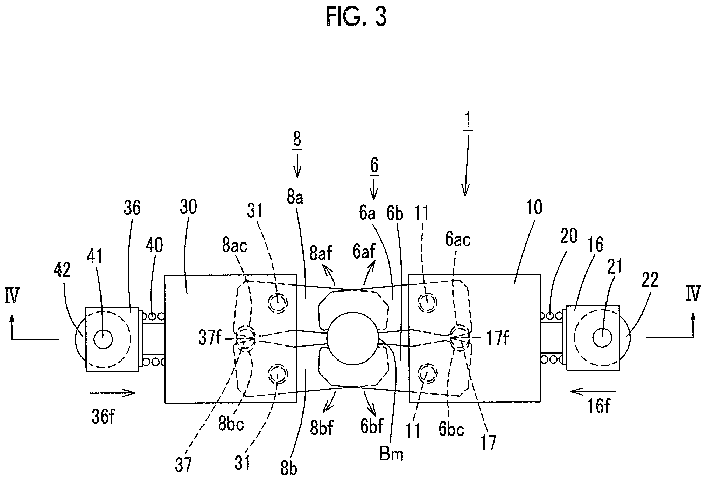

Fig. 3 is a plan view of a container gripper related to an embodiment.

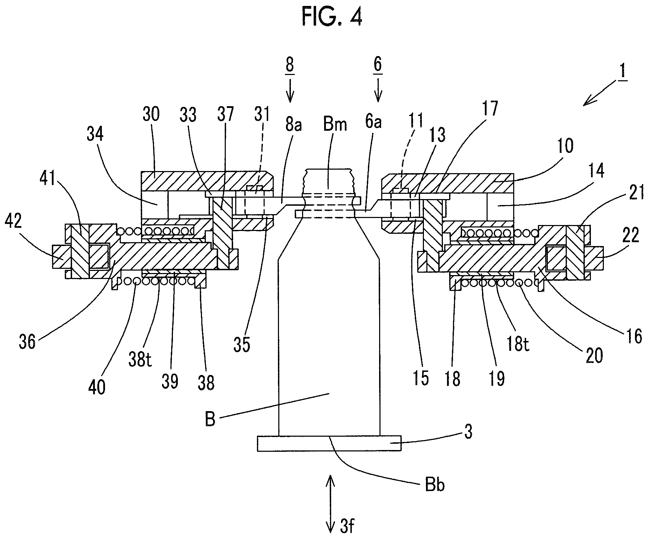

Fig. 4 is a sectional view taken along IV-IV of Fig. 3 illustrating a case where the bottle-shaped can is gripped.

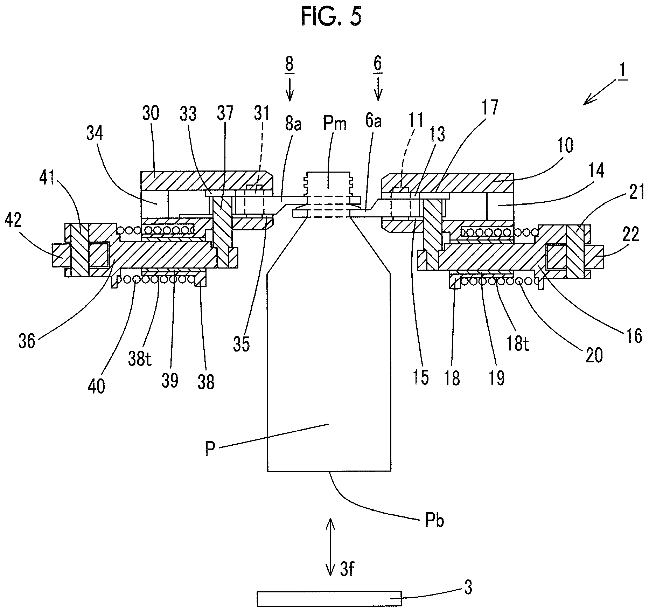

Fig. 5 is a view equivalent to Fig. 3 illustrating a case where the PET bottle is gripped.

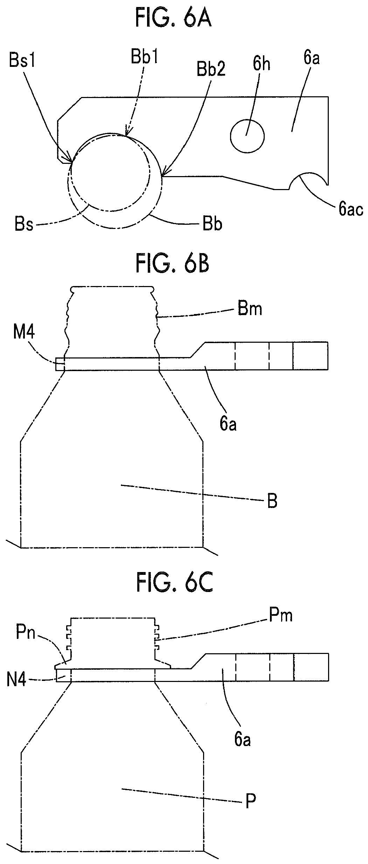

Figs. 6A to 6C are enlarged views illustrating the details of container gripping parts of the gripper.

In Fig. 1, a container (bottle-shaped can) B has a head part Bm and a bottom surface Bb. The head part Bm is constituted of a male threaded part (hereinafter simply referred to as a "threaded part") M1 to which a cap (not illustrated) is wound and tightened, a neck part M3, and a lower part M4 of the neck part M3.

Additionally, in Fig. 2, a container (PET bottle) P has a head part Pm and a bottom surface Pb. The head part Pm is constituted of a male threaded part (hereinafter simply referred to as a "threaded part") N1 to which a cap (not illustrated) is wound and tightened, a neck ring Pn, a neck part N3 between the threaded part N1 and the neck ring Pn, and a lower part N4 of the neck part N3 and the neck ring Pn.

In Figs. 3 and 4, a container gripper 1 has grippers (a first gripper 8 and a second gripper 6). The first gripper 8 is constituted of a pair of gripping pieces 8a and 8b that grip at least half of the circumference of the neck part M3 in a gripping shape adapted to the neck part M3 (refer to Fig. 1) of the head part Bm of the container (bottle-shaped can) B. The second gripper 6 is constituted of a pair of gripping pieces 6a and 6b that grip at least half of the circumference of the lower part M4 in conformity with the lower part M4 (refer to Fig. 1) of the neck part M3.

Additionally, the container gripper 1 includes an ascending/descending container platform 3 that can support the bottom surface Bb of the bottle-shaped can B, and the container platform 3 is configured so as to ascend and descend in a direction of arrow 3f by a lifting device (not illustrated).

The first gripper 8 is configured such that the pair of gripping pieces 8a and 8b become rockable in directions of arrows 8af and 8bf in the drawing or their opposite directions with shafts 31 as supporting points. The shafts 31 are arranged between an upper main gripper body 30 and a lower main gripper body 38 that are assembled by a post 34, and shaft ends of the shafts 31 are fitted to the upper main gripper body 30 and the lower main gripper body 38.

To describe the first gripper 8 in detail, the pair of gripping pieces 8a and 8b have circular-arc cutouts 8ac and 8bc. A shaft body 36 slides and moves with respect to a bearing 39 in a direction of arrow 36f by the engagement between a cam follower 42 that rotates around a shaft 41 attached to one end of the shaft body 36, and a cam (not illustrated). In this case, a pin 37 attached to the other end of the shaft body 36 is pushed in a direction of arrow 37f while engaging the circular-arc cutouts 8ac and 8bc. In this case, the gripping pieces 8a and 8b rock in the directions (opening directions) of arrows 8af and 8bf in the drawing with the shafts 31 as the supporting points. As a result, entrance and exit of the head part Bm of the container B are allowed.

Additionally, if the engagement between the cam follower 42 of the shaft body 36 and the cam (not illustrated) is released, the shaft body 36 is moved in a direction opposite to the direction of arrow 36f by the biasing of a compression spring 40 guided by an outer cylinder part 38t of the lower main gripper body 38. In this case, the pin 37 is pushed in a direction opposite to the direction of arrow 37f while engaging the circular-arc cutouts 8ac and 8bc. In this case, the gripping pieces 8a and 8b rock in directions (closing directions) opposite to the directions of arrows 8af and 8bf in the drawing with the shafts 31 as the supporting points. As a result, at least half of the circumference of the neck part M3 of the head part Bm of the container B can be gripped and constrained.

In addition, a sliding plate 33 is arranged between the gripping pieces 8a and 8b and the upper main gripper body 30. A sliding plate 35 is arranged between the gripping pieces 8a and 8b and the lower main gripper body 38. The gripping pieces 8a and 8b are configured so as to be sandwiched by the sliding plate 33 and the sliding plate 35 and perform the rocking.

Additionally, to describe the second gripper 6 in detail, the pair of gripping pieces 6a and 6b are configured so as to be rockable in the same directions as or directions opposite to directions of arrows 6af and 6bf with shafts 11 as supporting points. The shafts 11 are arranged between an upper main gripper body 10 and a lower main gripper body 18 that are assembled by a post 14, and shaft ends of the shafts 11 are fitted to the upper main gripper body 10 and the lower main gripper body 18.

The pair of gripping pieces 6a and 6b have circular-arc cutouts 6ac and 6bc, similar to the description of the pair of gripping pieces 8a and 8b of the first gripper 8.

A shaft body 16 slides and moves with respect to a bearing 19 in a direction of arrow 16f by the engagement between a cam follower 22 that rotates around a shaft 21 attached to one end of the shaft body 16, and a cam (not illustrated). In this case, a pin 17 attached to the other end of the shaft body 16 is pushed in a direction of arrow 17f while engaging the circular-arc cutouts 6ac and 6bc. In this case, the gripping pieces 6a and 6b rock in the directions (opening direction) of arrows 6af and 6bf in the drawing with the shafts 11 as the supporting points. As a result, entrance and exit of the head part Bm of the container B are allowed.

Additionally, if the engagement between the cam follower 22 of the shaft body 16 and the cam (not illustrated) is released, the shaft body 16 is moved in a direction opposite to the direction of arrow 16f by the biasing of a compression spring 20 guided by an outer cylinder part 18t of the lower main gripper body 18. In this case, the pin 17 is pushed in a direction opposite to the direction of arrow 17f while engaging the circular-arc cutouts 6ac and 6bc. In this case, the gripping pieces 6a and 6b rock in directions (closing directions) opposite to the directions of arrows 6af and 6bf in the drawing with the shafts 11 as the supporting points. As a result, at least half of the circumference of the lower part M4 of the neck part M3 of the head part Bm of the container B can be gripped and constrained.

In addition, a sliding plate 13 is arranged between the gripping pieces 6a and 6b and the upper main gripper body 10. A sliding plate 15 is arranged between the gripping pieces 6a and 6b and the lower main gripper body 18. The pair of gripping pieces 6a and 6b are configured so as to be sandwiched by the sliding plate 13 and the sliding plate 15 and perform the rocking.

With respect to the materials that constitute the container gripping parts of the pair of the gripping pieces 8a and 8b and the pair of gripping pieces 6a and 6b, gripping spots are easily worn out when the head part Bm that is a target to be gripped is made of metal. For this reason, as the materials that constitute the container gripping part, it is desirable to select engineering plastics or super engineering plastics, and particularly to select polyetheretherketone (PEEK) among super engineering plastics.

A case where the container gripper 1 grips the head part Bm using the bottle-shaped can B as the container is illustrated in Figs. 3 and 4, and the structure of the container gripper has been described. Meanwhile, a case where the head part Pm is gripped using the PET bottle P as the container will be described with reference to Fig. 5.

The gripping pieces 8a and 8b (the illustration of the gripping piece 8b is omitted in Fig. 5) of the first gripper 8 are configured so as to be capable of coming into contact with an upper side of the neck ring Pn of the head part Pm and gripping the neck part N3 in conformity with the neck part N3. The gripping pieces 6a and 6b (the illustration of the gripping piece 6b is omitted in Fig. 5) of the second gripper 6 are configured so as to be capable of coming into contact with the underside of the neck ring Pn of the head part Pm and gripping the lower part N4 in conformity with the lower part N4 of the neck part N3.

Here, the gripping pieces 8a and 8b are selected such that a gripping shape adapted to the neck part M3 of the bottle-shaped can B and a gripping shape that comes into contact with the upper side of the neck ring Pn of the PET bottle P and is adapted to the neck part N3 become the same gripping shape.

That is, the container gripper 1 is configured so as to be capable of being used for both the PET bottle P and the bottle-shaped can B.

Here, the second gripper 6 and the first gripper 8 will be described in detail with reference to Figs. 6A to 6C.

Fig. 6A is a plan view of the gripping piece 6a of the second gripper 6, illustrates a larger-aperture head part Bb of the bottle-shaped can B in a one-dot chain line, and illustrates a smaller-aperture head part Bs in a two-dot chain line.

In addition, the illustration of the PET bottle P is omitted because the relationship between a larger-aperture head part and a smaller-aperture head part of the gripping piece 6a is the same as the relationship between the larger-aperture head part Bb and the smaller-aperture head part Bs of the bottle-shaped can B.

Fig. 6B is a front view of the gripping piece 6a that is gripping the head part Bm illustrated in a one-dot chain line, and illustrates a state where the gripping piece 6a grips the lower part M4 of the neck part M3 of the head part Bm.

Fig. 6C is a front view of the gripping piece 6a that is gripping the head part Pm illustrated in a one-dot chain line, and illustrates a state where the gripping piece 6a comes into contact with the underside of the neck ring Pn of the head part Pm and grips the lower part N4 of the neck part N3.

In Fig. 6A, the gripping part of the head part Bm at one end of the gripping piece 6a is formed in a curved shape such that the aperture of the head part Bm can be used for both the larger-aperture head part Bb and the smaller-aperture head part Bs. The gripping part is configured so as to come into contact with the larger-aperture head part Bb from a place illustrated by Bs1 and a place illustrated by Bb1 to a place illustrated by Bb2 and come into contact with the smaller-aperture head part Bs from the place illustrated by Bs1 to the place illustrated by Bb1.

Although illustration is omitted in Fig. 6A, the gripping piece 6b illustrated in Fig. 3 is formed at a position and in a shape that are symmetrical to those of the gripping piece 6a. Similar to the gripping piece 6a, the gripping part of the head part Bm is configured such that the aperture of the head part Bm can be used for both the larger-aperture head part Bb and the smaller-aperture head part Bs.

Additionally, although illustration is omitted, as for the gripping pieces 8a and 8b of the first gripper 8, similar to the gripping pieces 6a and 6b, the gripping part of the head part Bm is configured such that the aperture of the head part Bm can be used for both the larger-aperture head part Bb and the smaller-aperture head part Bs.

In addition, the curved shapes of the gripping parts of the head parts become shapes such that the centers of smaller-aperture and larger-aperture head parts Bm are the same (concentric circles) when the head parts Bm are gripped by the gripping pieces 6a and 6b and the gripping pieces 8a and 8b.

In this way, the head part Bm of the bottle-shaped can B is configured with respect to a smaller aperture and a larger aperture such that at least half of the circumference thereof is gripped by the gripping pieces 6a and 6b or the gripping pieces 8a and 8b. Similarly, the head part Pm of the PET bottle P is configured with respect to a smaller aperture and a larger aperture such that at least half of the circumference thereof is gripped by the gripping pieces 6a and 6b or the gripping pieces 8a and 8b.

That is, the container gripper 1 is configured so as to be capable of being used for both the bottle-shaped can B and the PET bottle P and used for both the smaller aperture and the larger aperture of the respective head part Bm and head part Pm of the bottle-shaped can B and the PET bottle P.

Next, the operation of the container gripper 1 related to the embodiment of the invention will be described.

The bottle-shaped can (container) B or the PET bottle (container) P is delivered by alternately changing gripping from the first gripper 8 to the second gripper 6.

In the first gripper 8, as the shaft body 36 moves in the direction of arrow 36f and the circular-arc cutout 8ac and the circular-arc cutout 8bc are pushed in the direction of arrow 37f by the pin 37, the pair of gripping pieces 8a and 8b are rocked in the directions (opening directions) of arrows 8af and 8bf with the shafts 31 as the supporting points. For this reason, in the delivery from a previous process or in the delivery to a post-process, a state where entrance and exit of the neck part M3 of the head part Bm of the container B is allowed is brought about.

Additionally, in the first gripper 8, the shaft body 36 moves in the direction opposite to the direction of arrow 36f by the biasing of the compression spring 40. In connection with this, the pin 37 is moved in the direction opposite to the direction of arrow 37f, and the circular-arc cutouts 8ac and 8bc are pushed in the direction opposite to the direction of arrow 37f. For this reason, the pair of gripping pieces 8a and 8b rock in the directions (closing directions) opposite to the directions of arrows 8af and 8bf with the shafts 31 as the supporting points. In this way, the first gripper 8 grips and constrains the neck part M3 in the gripping shape adapted to the neck part M3 of the head part Bm of the container B delivered from a previous process, and positions the container in upward-downward directions.

In the second gripper 6, as the shaft body 16 moves in the direction of arrow 16f and the circular-arc cutout 6ac and the circular-arc cutout 6bc are pushed in the direction of arrow 17f by the pin 17, the pair of gripping pieces 6a and 6b are rocked in the directions (opening directions) of arrows 6af and 6bf with the shafts 11 as the supporting points. For this reason, in the delivery from a previous process or in the delivery to a post-process, a state where entrance and exit of the lower part M4 of the neck part M3 of the head part Bm of the container B is allowed is brought about.

Additionally, in the second gripper 6, the shaft body 16 moves in the direction opposite to the direction of arrow 16f by the biasing of the compression spring 20. In connection with this, the pin 17 is moved in the direction opposite to the direction of arrow 17f, and the circular-arc cutouts 6ac and 6bc are pushed in the direction opposite to the direction of arrow 17f. For this reason, the pair of gripping pieces 6a and 6b rock in the directions (closing directions) opposite to the directions of arrows 6af and 6bf with the shafts 11 as the supporting points. In this way, the second gripper 6 grips and constrains the lower part M4 of the neck part M3 of the head part Bm of the container B delivered from a previous process.

Additionally, the bottle-shaped can B of which the head part Bm is gripped by the second gripper 6 has the bottom surface Bb supported by the ascending/descending container platform 3. In this case, the bottle-shaped can B to be gripped is positioned in the upward-downward directions. Meanwhile, as for the PET bottle P of which the head part Pm is gripped by the second gripper 6, the pair of gripping pieces 6a and 6b comes into contact with the underside of the neck ring Pn of the head part Pm and grips the lower part N4 of the neck part N3. In this case, the PET bottle P is positioned in the upward-downward directions.

In addition, the ascending/descending container platform 3 is lowered and withdrawn to a lower position of arrow 3f and does not come into contact with the bottom surface Pb when the PET bottle P is delivered and conveyed.

Moreover, since the gripping parts of the head part Bm and the head part Pm of the pair of the gripping pieces 8a and 8b of the first gripper 8 and the pair of gripping pieces 6a and 6b of the second gripper 6 can be used for both a larger-aperture head part and a smaller-aperture head part, it is possible to cope with situations without performing mold replacement.

Additionally, as the materials that constitute the gripping spots of the head part Bm and the head part Pm of the pair of the gripping pieces 8a and 8b and the pair of gripping pieces 6a and 6b, engineering plastics or super engineering plastics, or polyetheretherketone (PEEK) among super engineering plastics is used. Accordingly, when the head part Bm of the bottle-shaped can B or the PET bottle and the head part Pm of the PET bottle P are gripped, wear resistance and durability can be improved. For this reason, a container can be gripped so as not to damage a gripping spot of the container.

Particularly, when the head part Bm that is a target to be gripped is a bottle-shaped can made of metal (made of aluminum or made of steel), the gripping part also has a great influence on wear due to repeated gripping. However, gripping pieces having excellent wear resistance and durability are obtained by selecting polyetheretherketone (PEEK).

### Industrial Applicability

According to the above-described container gripper, the container gripper is configured such that, when the bottle-shaped can is gripped, the second gripping piece grips the lower part of the neck part and the bottom surface of the bottle-shaped can is supported by the container platform, and when the PET bottle is gripped, the second gripping piece comes into contact with the underside of the neck ring of the PET bottle and grips the lower part of the neck part and the container platform is withdrawn to the position where the container platform does not come into contact with the bottom surface of the PET bottle. Accordingly, the container gripper can be used to grip both the bottle-shaped can and the PET bottle.

### Reference Signs List

- 1:: CONTAINER GRIPPER
- 3:: (ASCENDING/DESCENDING) CONTAINER PLATFORM
- 6:: SECOND GRIPPER (GRIPPER)
- 6a, 6B:: GRIPPING PIECE (SECOND GRIPPING PIECE)
- 8:: FIRST GRIPPER (GRIPPER)
- 8a, 8b:: GRIPPING PIECE (FIRST GRIPPING PIECE)
- 11, 31:: SHAFT
- 16, 36:: SHAFT BODY
- 17, 37:: PIN
- 20, 40:: COMPRESSION SPRING
- B:: BOTTLE-SHAPED CAN (CONTAINER)
- Bb:: BOTTOM SURFACE (OF BOTTLE-SHAPED CAN)
- Bm:: HEAD PART (OF BOTTLE-SHAPED CAN)
- P:: PET BOTTLE (CONTAINER)
- Pm:: HEAD PART (OF PET BOTTLE)
- Pn:: NECK RING (OF PET BOTTLE)
- M1, N1:: THREADED PART
- M3, N3:: NECK PART
- M4, N4:: LOWER PART (OF NECK PART)

## Claims

1. A container gripper that includes a gripper having a gripping part which is constituted of a pair of gripping pieces disposed to be openable and closable by relative movement, allows a head part of a container to move in and out of the gripper when being opened, and allows the head part to be constrained when being closed, and that alternately changes gripping from a first gripper to a second gripper to deliver the container, the container gripper comprising:
an ascending/descending container platform capable of supporting a bottom surface of the container gripped by the gripper,
wherein the gripping part of the first gripper includes a first gripping piece that grips at least half of the circumference of a neck part in a gripping shape adapted to the neck part provided at the head part,
wherein the gripping part of the second gripper includes a second gripping piece that grips at least half of the circumference of a lower part in conformity with the lower part of the neck part,
wherein when a bottle-shaped can is gripped by the second gripping piece, the second gripping piece grips the lower part of the neck part, and a bottom surface of the bottle-shaped can is supported by the container platform, **characterised in that** when a PET bottle is gripped by the second gripping piece, the second gripping piece comes into contact with an underside of a neck ring of the PET bottle, and grips a lower part of a neck part, and the container platform is withdrawn to a position where the container platform does not come into contact with a bottom surface of the PET bottle, and
wherein the container gripper is configured to be capable of being used to hold both the bottle-shaped can and the PET bottle.

2. The container gripper according to Claim 1,
wherein a material that constitutes a container gripping part of the first gripping piece and a container gripping part of the second gripping piece is an engineering plastic.

3. The container gripper according to Claim 1,
wherein a material that constitutes a container gripping part of the first gripping piece and a container gripping part of the second gripping piece is a super engineering plastic.

4. The container gripper according to Claim 3,
wherein the super engineering plastic of the material is polyetheretherketone.

## Patentansprüche

1. Behältergreifer, welcher einen Greifer beinhaltet, der einen Greifteil aufweist, welcher aus einem Paar von Greifstücken besteht, welche eingerichtet sind, um durch relative Bewegung geöffnet und geschlossen werden zu können, einem Kopfteil eines Behälters erlaubt, sich in den und aus dem Greifer zu bewegen, wenn er geöffnet wird, und dem Kopfteil erlaubt, eingeklemmt zu sein, wenn er geschlossen wird, und welcher Greifen abwechselnd von einem ersten Greifer zu einem zweiten Greifer ändert, um den Behälter zu liefern, wobei der Behältergreifer umfasst:
eine ansteigende/abfallende Behälterplattform, welche in der Lage ist, eine Bodenfläche des von dem Greifer gegriffenen Behälters zu stützen,
wobei der Greifteil des ersten Greifers ein erstes Greifstück beinhaltet, welches zumindest eine Hälfte des Umfangs eines Halsteils in einer Greifform greift, welche an den Halsteil angepasst ist, welcher an dem Kopfteil bereitgestellt ist,
wobei der Greifteil des zweiten Greifers ein zweites Greifstück beinhaltet, welches zumindest eine Hälfte des Umfangs eines unteren Teils in Übereinstimmung mit dem unteren Teil des Halsteils greift,
wobei, wenn eine flaschenförmige Dose durch das zweite Greifstück gegriffen wird, das zweite Greifstück den unteren Teil des Halsteils greift, und eine Bodenfläche der flaschenförmigen Dose durch die Behälterplattform gestützt wird,
**dadurch gekennzeichnet, dass**, wenn eine PET-Flasche von dem zweiten Greifstück gegriffen wird, das zweite Greifstück mit einer Unterseite eines Halsrings der PET-Flasche in Kontakt kommt und einen unteren Teil eines Halsteils greift, und die Behälterplattform in eine Position zurückgezogen wird, an der die Behälterplattform nicht mit einer Bodenfläche der PET-Flasche in Kontakt kommt, und
wobei der Behältergreifer konfiguriert ist, um in der Lage zu sein, verwendet zu werden, um sowohl die flaschenförmige Dose als auch die PET-Flasche zu halten.

2. Behältergreifer nach Anspruch 1,
wobei ein Material, welches einen Behältergreifteil des ersten Greifstücks und einen Behältergreifteil des zweiten Greifstücks darstellt, ein technischer Kunststoff ist.

3. Behältergreifer nach Anspruch 1, wobei ein Material, welches einen Behältergreifteil des ersten Greifstücks und einen Behältergreifteil des zweiten Greifstücks darstellt, ein supertechnischer Kunststoff ist.

4. Behältergreifer nach Anspruch 3,
wobei der supertechnische Kunststoff des Materials Polyetheretherketon ist.

## Revendications

1. Dispositif de préhension de contenant qui inclut un dispositif de préhension présentant une partie de préhension qui est constituée d'une paire de pièces de préhension disposées de manière à pouvoir s'ouvrir et se fermer par un déplacement relatif, permet à une partie tête d'un contenant de se déplacer dans et hors du dispositif de préhension lorsqu'elle est ouverte, et permet à la partie tête d'être confinée lorsqu'elle est fermée, et qui passe en alternance la préhension d'un premier dispositif de préhension à un second dispositif de préhension pour distribuer le contenant, le dispositif de préhension de contenant comprenant :
une plateforme pour contenant montante/descendante capable de supporter une surface de fond du contenant saisi par le dispositif de préhension,
dans lequel la partie de préhension du premier dispositif de préhension inclut une première pièce de préhension qui saisit au moins la moitié de la circonférence d'une partie col selon une forme de préhension adaptée à la partie col située au niveau de la partie tête,
dans lequel la partie de préhension du second dispositif de préhension inclut une seconde pièce de préhension qui saisit au moins la moitié de la circonférence d'une partie inférieure en conformité avec la partie inférieure de la partie col,
dans lequel, lorsqu'une boîte en forme de bouteille est saisie par la seconde pièce de préhension, la seconde pièce de préhension saisit la partie inférieure de la partie col, et une surface de fond de la boîte en forme de bouteille est supportée par la plateforme pour contenant,
**caractérisé en ce que**, lorsqu'une bouteille en PET est saisie par la seconde pièce de préhension, la seconde pièce de préhension vient en contact avec un dessous d'une bague de col de la bouteille en PET, et saisit une partie inférieure d'une partie col, et la plateforme pour contenant est retirée jusqu'à une position où la plateforme pour contenant ne vient pas en contact avec une surface de fond de la bouteille en PET, et
dans lequel le dispositif de préhension de contenant est configuré pour être capable d'être utilisé pour maintenir à la fois la boîte en forme de bouteille et la bouteille en PET.

2. Dispositif de préhension de contenant selon la revendication 1,
dans lequel un matériau qui constitue une partie de préhension de contenant de la première pièce de préhension et une partie de préhension de contenant de la seconde pièce de préhension est un plastique d'ingénierie.

3. Dispositif de préhension de contenant selon la revendication 1,
dans lequel un matériau qui constitue une partie de préhension de contenant de la première pièce de préhension et une partie de préhension de contenant de la seconde pièce de préhension est un super-plastique d'ingénierie.

4. Dispositif de préhension de contenant selon la revendication 3,
dans lequel le super-plastique d'ingénierie du matériau est du polyétheréthercétone.
